# EUROPEAN PATENT APPLICATION

(11) **EP 4 050 531 A1**
(43) Date of publication of application: **31.08.2022**
(21) Application number: 22158864.3
(22) Date of filing: 25.02.2022
(51) Int. Cl.: G06Q 10/00, G06Q 10/06, G06Q 10/08, G06Q 50/28

(54) **SYSTEM AND METHOD FOR PREDICTIVE INVENTORY**

(30) Priority: 26.02.2021 US 202117187421
(71) Applicant: Fiix Inc., Toronto, ON M6R 2J5 (CA)
(72) Inventor: Esmalifalak, Mohammad, Toronto, M6R 2J51 (CA); Iyengar, Akshay, Toronto, M6R 2J51 (CA); Mirhoseininejad, Seyedmorteza, Toronto, M6R 2J51 (CA); Emery, Francis, Toronto, M6R 2J51 (CA); Mathewson, Taylor, Toronto, M6R 2J51 (CA); Doulas, Peter, Toronto, M6R 2J51 (CA)
(74) Representative: Grünecker Patent- und Rechtsanwälte PartG mbB

(57) **Abstract**

There is provided systems and methods for forecasting usage of one or more parts. Such systems may receive historical usage data, generate machine learning models, generate predictions using the machine learning models, and perform one or more actions based on the generated predictions.

## Description

### FIELD

This relates generally to computerized systems for managing inventory, and in particular to computerized systems for predictively managing inventory.

### BACKGROUND

Traditional inventory management systems may attempt to anticipate demand for one or more parts using fixed-demand statistical modelling. This may involve estimating demand for a given year based on the previous year, and then dividing that estimated demand over the 12 months of the year. Such systems do not necessarily provide accurate predictions or forecasts.

Moreover, traditional forecasting methods which are able to achieve improved accuracy require substantial amounts of training and education within an organization in order to be deployed and used effectively.

There is a need for inventory management systems which more accurately and efficiently enable inventory demand forecasting in a manner which does not require special training or education among workers in order to be implemented.

### SUMMARY

According to an aspect, there is provided a method of forecasting usage of one or more parts, the method comprising: receiving, by a computing device, historical usage data for said one or more parts; training, by said computing device, one or more machine learning models based on said historical usage data; generating, by said computing device, a predicted amount of future demand for said one or more parts based on said one or more machine learning models; and performing, by said computing device, an action based on said predicted amount of future demand for said one or more parts.

According to another aspect, there is provided a system for forecasting usage of one or more parts, the system comprising: a data accumulator module for receiving historical usage data for said one or more parts; a model generation module for training one or more machine learning models based on said historical usage data; a part forecasting module for generating a predicted amount of future demand for said one ore more parts based on said one or more machine learning models; and a notification module for performing an action based on said predicted amount of future demand for said one or more parts.

Other features will become apparent from the drawings in conjunction with the following description.

### BRIEF DESCRIPTION OF DRAWINGS

In the figures which illustrate example embodiments,
FIG. 1 is a block diagram depicting components of an example computing system;
FIG. 2 is a block diagram depicting components of an example server or client computing device;
FIG. 3 depicts a simplified arrangement of software at a server or client computing device;
FIG. 4 depicts a simplified arrangement of components of an example inventory management system;
FIG. 5 is a block diagram depicting example components in a data accumulator module;
FIG. 6 is a block diagram illustrating example components of a model generation module;
FIG. 7 is a block diagram illustrating example components of a part forecasting module;
FIG. 8 is an illustration of the contents of an example set of raw data and an example set of clean data after processing by data accumulator module 410; and
FIG. 9 is an illustration of an example process of generating a prediction for parts usage base on clean data and a machine learning model.

### DETAILED DESCRIPTION

Various aspects of preferred embodiments are described herein with reference to the drawings.

Parts forecasting and inventory management solutions are typically performed in one or two ways: mathematical solutions and computational solutions. Mathematical solutions involve developing complex stochastic formulas that use probabilities and statistics to estimate future purchasing levels. However, mathematical solutions require deep research into historical inventory consumption and resupply data, which requires a very advanced understanding of statistical and operations processes, which creates a large barrier to entry for most organizations. This may be overcome by using tools which automate the generation and use of mathematical models, but such automation often compromises the accuracy of the model. Such models are typically updated infrequently, which makes such models ineffective at handling shocks in supply and/or demand. As such, such models tend to only be useful in steady state operation (in which advanced forecasting techniques may not be necessary).

Computational solutions improve upon mathematical solutions by using Monte Carlo simulations and projections to identify future system shocks and the outcomes of those shocks. Once such shocks are identified, organizations may deliberately plan for a shock scenario, or include future shock forecasts into their existing buying pattern using complex weighted averages. This may allow for an improved capacity for handling shock scenarios, but computational models tend to be quite computationally heavy (as the computational load for generating thousands to billions of different possible future states is quite high), and the underlying data associated therewith tends not to be updated frequently. Moreover, the underlying data tends to require highly specialized skills to acquire, which acts as a further barrier.

Some embodiments described herein may improve the accuracy of previously inaccurate forecasting methods by analyzing historical work data obtained from a computerized maintenance system and associated database structures. Historical work data may include, for example, the amount of work being done by each of one or more users/organizations/entities, what times of year that work is being done, and the type and quantity of parts being used for that work. One or more of these data points may be analyzed using machine learning algorithms. Such analysis may allow for a determination as to possible seasonal variation (or seasonality) with respect to parts consumption.

Some embodiments described herein utilize a machine learning model which may learn, based on historical work data, how much work a user/organization/entity may be doing in the future, and the type and quantity of parts that future work will require. This may allow for improved accuracy of forecasts, because forecasts are not based on any assumptions around potential demand, and are instead based on direct demand for individual parts (or sets of correlated parts).

Some embodiments described herein may require less experience and special training relative to traditional methods of inventory forecasting. For example, the use of machine learning (ML) algorithms may alleviate the longstanding requirement for experience and special training among workers to perform traditional inventory forecasting, because the experience and expertise required is instead built into the resulting ML model. Embodiments described herein may require the use of specialized computing systems to implement the systems and methods described herein.

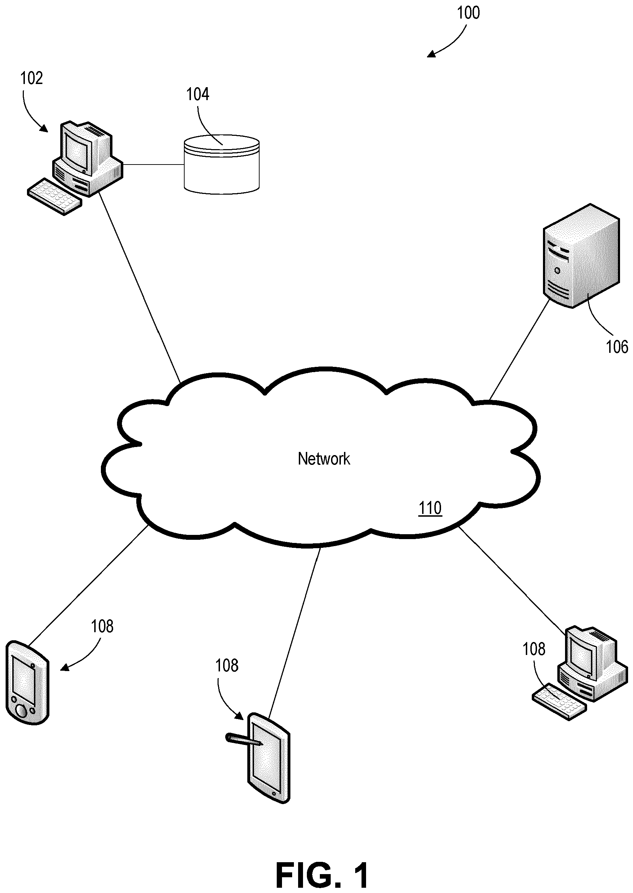

FIG. 1 is a block diagram depicting components of an example computing system. Components of the computing system are interconnected to define an inventory management system 100. As used herein, the term inventory management system refers to a combination of hardware devices configured under control of software, and interconnections between such devices and software. Such systems may be operated by one or more users, or operated autonomously or semi-autonomously once initialized.

As depicted, inventory management system 100 includes at least one server 102 with a data storage 104 such as a hard drive, array of hard drives, network-accessible storage or the like; at least one web server 106 and a plurality of client computing devices 108. Server 102, web server 106 and client computing devices 108 are in communication by way of a network 110. More or fewer of each device are possible relative to the example configuration depicted in FIG. 1. Data storage 104 may contain, for example, a plurality of sets of used parts data and other maintenance data from one or more entities or organizations. For example, the used parts data may include an identifier of the entity using a part or parts, a list of the type and quantity of parts being used, and a time interval associated with the use.

The network 110 may include one or more local-area networks or wide-area networks, such as IPv4, IPv6, X.25, IPX compliant or similar networks, including one or more wired or wireless access points. The networks may include one or more local-area networks (LANs) or wide-area networks (WANs), such as the internet. In some embodiments, the networks are connected with other communications networks, such as GSM/GPRS/3G/4G/LTE networks.

As shown, server 102 and web server 106 are separate machines, which may be at different physical or geographical locations. However, server 102 and web server 106 may alternatively be implemented in a single physical device.

As will be described in further detail, server 102 may be connected to a data storage 104, which may include records containing information associated with an entity (e.g. an individual user, an individual organization, a branch of a particular organization, a customer, or the like). Such information may include, for example, historical parts usage data for one or more users/organizations/entities.

In some embodiments, web server 106 hosts a website 400 accessible by client computing devices 108. Web server 106 is further operable to exchange data with server 102 such that data associated with an entity (e.g. used parts data, and other maintenance data) can be retrieved from server 102 and utilized in connection with the generation or re-generation of machine learning models for forecasting demand for one or more parts.

Server 102 and web server 106 may be based on Microsoft Windows, Linux, or other suitable operating systems.

Client computing devices 108 may be, for example, personal computers, smartphones, tablet computers, or the like, and may be based on any suitable operating system, such as Microsoft Windows, Apple OS X or iOS, Linux, Android, or the like. In some embodiments, client computing devices 108 may be associated with one or more of entities which log and transmit data relating to maintenance and parts usage.

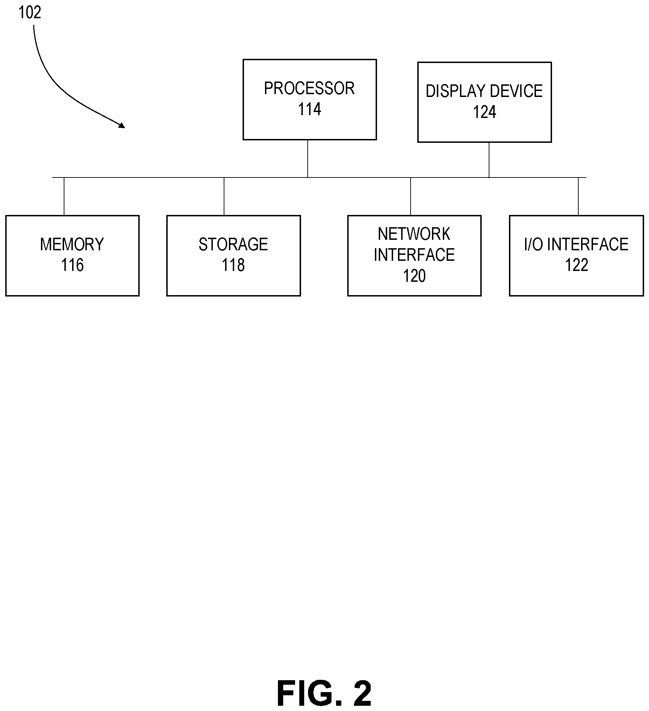

FIG. 2 is a block diagram of components of an example server 102, 106 or client computing device 108. As depicted, each server 102, 106 and client computing device 108 includes a processor 114, memory 116, persistent storage 118, network interface 120 and input/output interface 122.

Processor 114 may be an Intel or AMD x86 or x64, PowerPC, ARM processor, or the like. Processor 114 may operate under control of software loaded in memory 116. Network interface 120 connects server 102, 106 or client computing device 108 to network 110. I/O interface 122 connects server 102, 106 or client computing device 108 to one or more storage devices (e.g. storage 104) and peripherals such as keyboards, mice, pointing devices, USB devices, disc drives, display devices 124, and the like.

Software may be loaded onto server 102, 106 or client computing device 108 from peripheral devices or from network 106. Such software may be executed using processor 114.

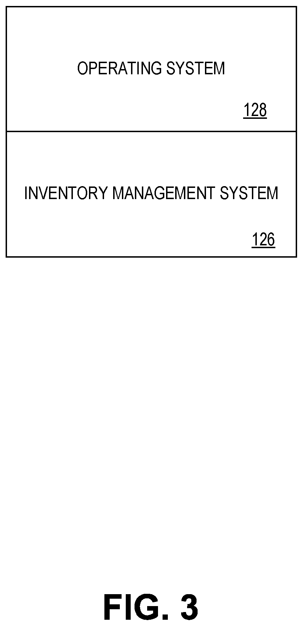

FIG. 3 depicts a simplified arrangement of software at a server 102 or client computing device 108. The software may include an operating system 128 and application software, such as inventory management system 126. Inventory management system 126 is configured to accept inputs which may include historical part usage data (e.g. part type, time duration, entity identifier, and the like). In some embodiments, inventory management system 126 may accept the above-noted inputs and learn one or more patterns of parts usage and generate an accurate tool for predicting parts being used in the future. In some embodiments, usage may be forecasted for one or more entities/organizations. In some embodiments, generating forecasts may include measuring the maturity state of input data for a specific part and then determining the forecasting method to be used.

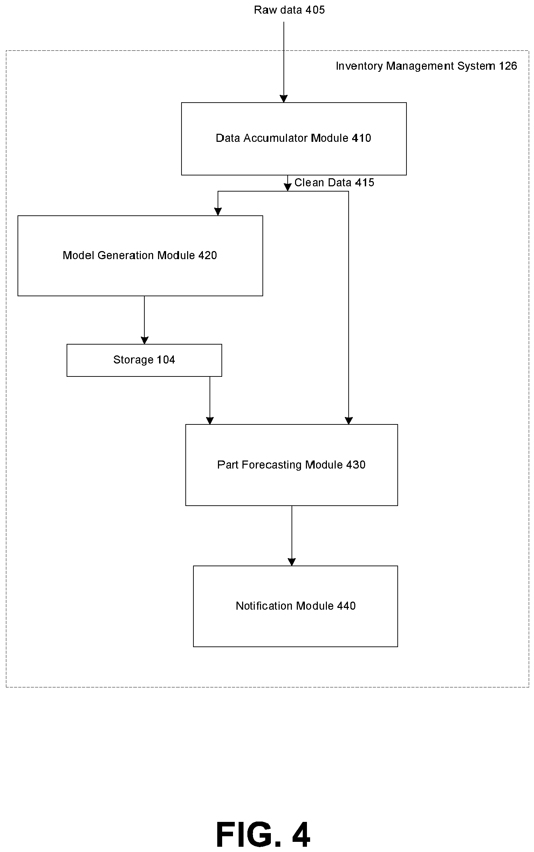

FIG. 4 depicts a simplified arrangement of components of inventory management system 126. As depicted, inventory management system 126 includes data accumulator module 410, model generation module 420, part forecasting module 430, and notification module 440.

Data accumulator module 410 is configured to retrieve or receive raw data 405 from a database and clean and/or refine the retrieved raw data 405 for use with model generation module 420 and/or parts forecasting module 430. Model generation module 420 is configured to generate mathematical machine learning models based on clean data 415. In some embodiments, models may be saved to storage 104. In some embodiments, models may be saved to local storage 118, although models may be alternatively or additionally saved to remote storage. In some embodiments, models may be transmitted directly to part forecasting module 430. Parts forecasting module 430 may generate forecasts for one or more parts based on the generated models and the clean data 415. Notification module 440 is configured to provide or transmit notifications to the user of the forecasted volume of parts. In some embodiments, notification module 440 may take additional actions such as, for example, ordering or otherwise effecting delivery or obtaining of part(s) based on the forecast(s) for that part(s). In some embodiments, notification module 440 may order or obtain parts automatically.

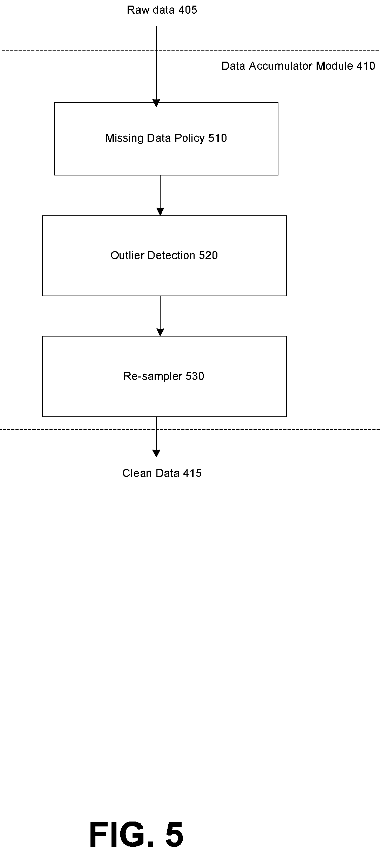

FIG. 5 is a block diagram of example components in data accumulator module 410. Data accumulator module 410 is configured to analyze large amounts of data and retrieve queries relating to parts being used. Data accumulator 410 accepts raw data 405 as an input. In some embodiments, raw data 405 includes one or more of a tenant identifier, a list of one or more parts, and a time interval. The tenant identifier may be the name or ID associated with a customer. The list of parts, which may be provided by the customer, may identify the name or an identifier of parts used. The time interval may be the time difference between two consecutive values in a time series. In some embodiments, raw data 405 is obtained from an external database or data storage 104. In some embodiments, a database may store raw data 405 for a plurality of organizations.

The output of data accumulator module 410 is clean data 415. Clean data 415 is obtained by processing raw data 405 with missing data policy 510, outlier detection 520 and re-sampler 530. In some embodiments, missing data policy 510 uses a combination of machine learning and statistical approaches to identify values which are missing from raw data 405. In some embodiments, when missing data is found to exist, missing data policy 510 may impute values based on values which would be expected and/or reject one or more data points as invalid. Imputing values may be done using any number of numerical methods, including linear interpolation, averaging, nulls, 0 values, or the like. A person skilled in the art will appreciate that the particular method used to impute a value will depend on the desired format of the data and the design of the systems by which the data is processed.

In some embodiments, outlier detection 520 uses a combination of machine learning and statistical approaches to identify abnormal values in raw data 405. Abnormal values may include, for example, excess spikes or troughs. In some embodiments, outlier detector identifies situations where spikes or troughs occur and may impute data within an acceptable range in place of the abnormal values. For example, in a 10 week period, if between 5 and 10 parts were used each week, and then the following week shows 10,000 parts were consumed, it may be reasonable to assume that the 10,000 figure is in error (e.g. through data entry error, human error, or the like). Outlier detection 520 is configured to recognize such outliers and substitute in an appropriate value.

Clean data 415 is obtained by inputting the data processed by missing data policy 510 and outlier detection 520 into re-sampler 530. In some embodiments, re-sampler takes a time series of heterogeneous timed values and returns values with homogeneous time intervals. Re-sampler 530 may implement methods, such as statistical inferencing, to generate uniform sampling distribution data based on the actual data. In some embodiments, statistical inferencing may minimize the amount of re-sampling errors In some embodiments, clean data 415 may be formatted as a time-series of values. In some embodiments, clean data 415 does not contain any missing values or abnormal data.

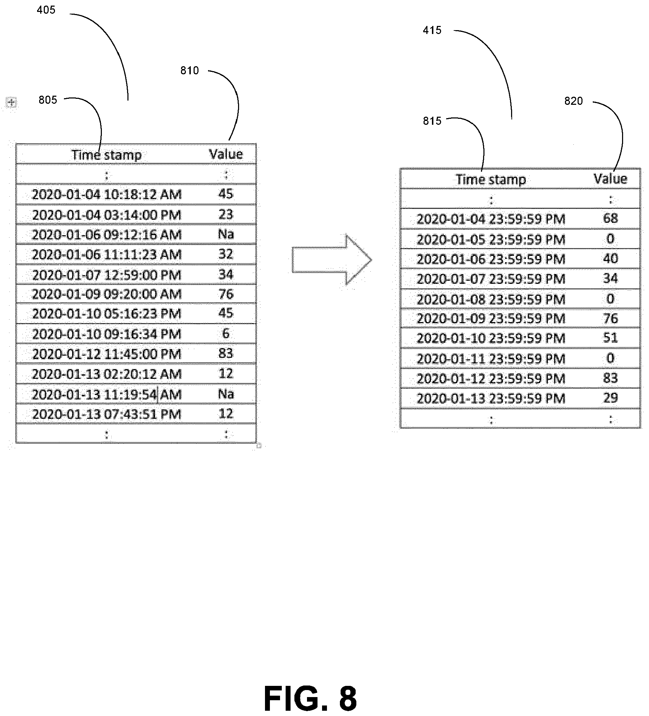

FIG. 8 is an illustration of the contents of an example set of raw data 405, and an example resulting set of clean data 415 after processing by data accumulator module 410. As depicted, raw data 405 includes a plurality of tuples of time stamp 805 and value 810. In some embodiments, value 810 may correspond to a parts usage. As depicted, raw data includes, among other features, some time stamps from the same day at different times, some days with no time stamp, as well as time stamps which are not equally spaced apart. As shown, clean data 415 includes tuples of time stamps 815 and values 820. As can be seen, clean data 415 includes time stamps 815 which are uniformly spaced, and time stamps which have been modified relative to raw data 405. Some time stamps have been aggregated (e.g. the two time stamps from January 4, 2020, with usages of 45 and 23, which are represented as one time stamp from January 4, 2020 at 23:59:59PM with the sum of 68). Some time stamps have been inserted (e.g. the entry for January 5, 2020 in clean data 415, with a value of 0). It will be appreciated that the examples depicted in FIG. 8 are merely examples and clean data 415 and raw data 405 may include additional data fields and/or be formatted in other ways, and that the data structure depicted is merely an example.

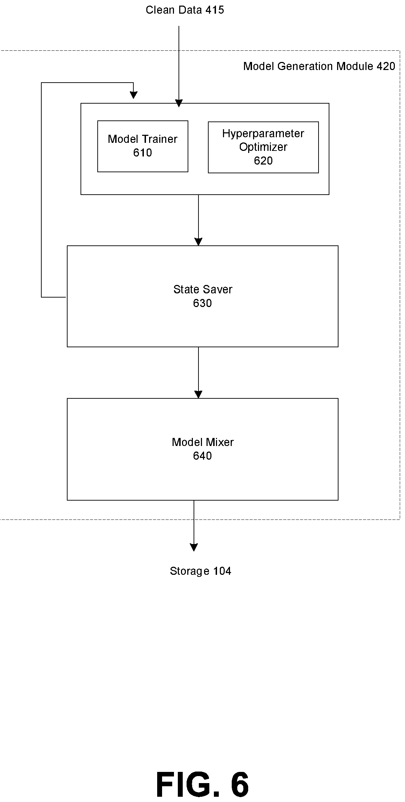

Clean data 415 may then be transmitted to model generation module 420 and/or part forecasting module 430. FIG. 6 is a block diagram illustrating example components of model generation module 420. Model generation module 420 generates machine learning models to for use with part forecasting module 430. Model generation module 420 is configured to train one or more machine-learning models using model trainer 610, and the states of said models are saved by state saver 630. In some embodiments, models are saved to storage 104.

In some embodiments, model trainer 610 may utilize machine-learning techniques to discover correlations between variables. For example, clean data 415 may include data relating to the consumption of parts over a time period by one or more entities or organizations (e.g. parts consumed on work orders), and model trainer 610 may discover correlations between time and consumption of a given part or set of parts. This is advantageous in that the machine learning models learn the correlations to generate demand forecasts, rather than requiring the manual involvement of human operators. In some embodiments, model trainer may further consider correlations relating to historical seasonality, asset or part types, associated or correlated work orders, and/or data obtained from loT devices installed on assets (e.g. industrial internet of things, or IloT devices).

In some embodiments, model generation is an iterative process in which a plurality of iterations are performed. The number of iterations may be limited to a predefined limit which may help to ensure that the randomness of the resulting model is minimized. Within each iterative loop, a model may be trained and the model's hyperparameters (e.g. number and size of layer and inputs) may be tuned using an optimization process. In some embodiments, models may be updated or refreshed as new clean data 415 is received in model generation module 420.

For example, in some embodiments, model generation module 420 may periodically update one or more models after a predetermined time period has elapsed. In some embodiments, models may be updated upon receiving a new batch of clean data 415 from data accumulator module 410. In some embodiments, data accumulation module 410 may continuously send clean data 415 to model generation module 420 as new raw data 405 is received and new clean data 415 is generated. In other embodiments, data accumulator module 410 may distribute batches of new clean data to 415 (e.g. periodically, after a predetermined time period has elapsed, or after a predetermined amount of new clean data 415 has been generated).

Relative to traditional inventory management methods, in which demand is forecasted on a yearly basis and then allocated across multiple months or purchasing periods based on the expected seasonality of that purchasing period, systems and methods described herein may offer the advantage of improved shock handling. Since some embodiments dynamically re-forecast demand as new data is received, this allows for shocks in supply and/or demand to be anticipated and accounted for earlier in time, which allows such shocks to be handled more effectively. Additionally, with just-in-time inventory management practices where demand is predicted constantly, embodiments described herein may have the advantage of being able to factor in safety inventories which may have already been calculated, thereby allowing for continuous prediction of future inventory demand without risking stockouts (that is, out of stock events where inventory is exhausted) for users.

Once models have been developed, the models are evaluated. Models may be evaluated by, for example, calculating the corresponding root-mean-square (RMS) error. RMS error is a metric which measures the difference between observed values and values estimated by the models. It will be appreciated that other metrics for evaluating model accuracy or quality are contemplated. Models may be ranked based on the RMS error relative to other models. In some embodiments, the states of the top models (i.e. models which exhibit the lowest error) are stored locally in state saver 630. In some embodiments, the top three models are kept for use with model mixer 640. In other embodiments, more than three or less than three models may be used with model mixer 640.

In some embodiments, model mixer 640 is configured to combine the top models selected to generate a single combined model. In some embodiments, model mixer 640 uses an ensembling mechanism to combine the models. Ensemble methods use multiple ML algorithms to obtain predictive performance which may be more accurate than could be obtained from the individual constituent models. Ensembling may also allow for suppression of uncertainty. In some embodiments, model mixer 640 suppresses uncertainty in the models. The resulting combined model may be stored in storage 104 or in other suitable data storage for retrieval by part forecasting module 430. In some embodiments, there may be a separate model for each part. In some embodiments, there may be one or more models for a set or combination of parts.

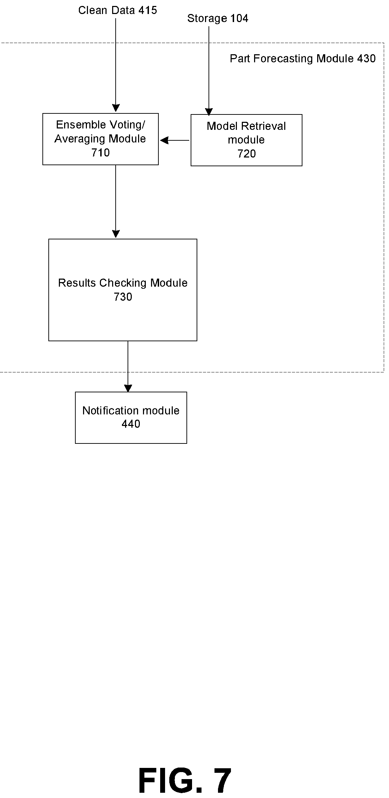

FIG. 7 is a block diagram illustrating example components of part forecasting module 430. Part forecasting module 430 is configured to predict parts which may be used in the future. As depicted, part forecasting module 430 includes ensemble voting/averaging module 710, model retrieval module 720, and results checking module 730. In some embodiments, model retrieval module is configured to retrieve one or models for a particular part or set of parts from storage 104. In some embodiments, model retrieval module 720 is configured to retrieve the combined model generated by model mixer 640.

Ensemble voting/averaging module 710 uses clean data 415 and the model retrieved from model retrieval module 720 to make predictions about future usage of a particular part or set of parts. In some embodiments, ensemble/voting averaging module 710 uses the most recent clean data 415 within a particular time frame. That time frame may be the previous month, the previous 6 months, the previous year, the previous 2 years, all previous time periods, or any desired time period.

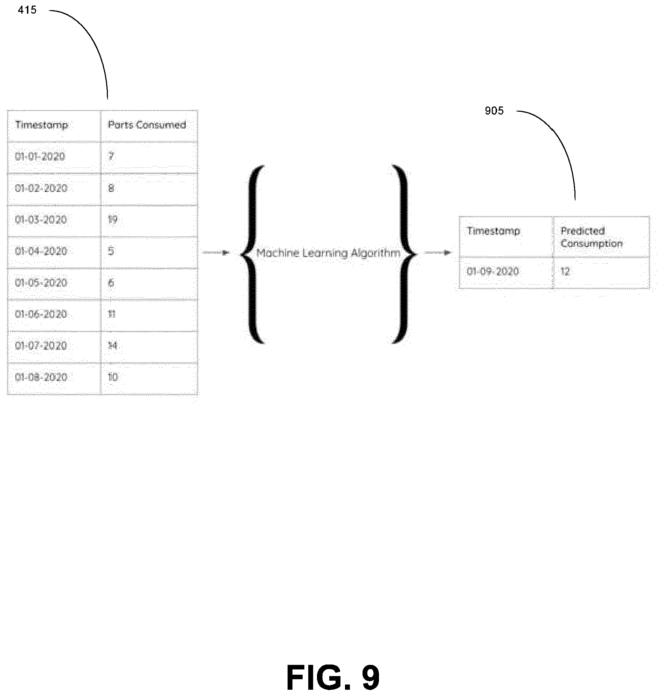

Ensemble voting/averaging module 710 may generate predictions for usage of a part or set of parts by applying clean data 415 to the one or more models retrieved for that part or set of parts. FIG. 9 is a flow diagram depicting an example process for obtaining predictions for usage. As depicted clean data 415 from January 1, 2020 to January 8, 2020 is provided to the model and a prediction 905 for January 9, 2020 is obtained. It will be appreciated that any suitable amount of clean data 415 may be provided to the model to generate a prediction. For example, a subset of clean data 415 may be provided rather than the full data set. Although depicted as being for one day in FIG. 9, in some embodiments, prediction 905 may include predictions for any desired time period (e.g. two days, a week, a month, or the like).

Results checking module 730 supervises the generation of predictions 905. In some embodiments, results checking module 730 uses statistical and ML anomaly detection methods. In some embodiments, when an abnormal value is detected, the abnormal value may be replaced by the mean or average of adjacent values. For example, the mean of 2, 4, 6, or any desired number of adjacent values may be used as a substitute for an abnormal value. In some embodiments, results checking module 730 logs or reports abnormalities detected in the predictions.

Once cleared by results checking module 730, the forecast for one or more parts is transmitted to notification module 440. Notification module is configured to notify the user and/or order parts in accordance with the forecasts received from part forecasting module 430. For example, notification module 440 may generate email notifications containing forecasts, alerts which appear on a graphical user interface of a computing device (e.g. desktop computer, laptop, smartphone, smartwatch, or the like) associated with the user. In some embodiments, notifications may include effecting transmission of a text message to one or more particular users (e.g. a user within an organization whose responsibilities relate to managing the inventory of parts) within the organization.

In some embodiments, inventory management system 126 may be integrated into a broader computerized maintenance management system (CMMS), such as, for example, as described in U.S. Patent Nos. 9,479,388 and 10,169,743, the entire contents of which are incorporated by reference. Such integration may be achieved via, for example, an Application Programming Interface (API) which enables a user to send an instruction to inventory management system 126 via a client side of the CMMS for a new or updated forecast for one or more parts. Such integration would reduce the costs and hurdles associated with the use of third party offerings which are not integrated into a particular organization's maintenance management systems.

Of course, the above described embodiments are intended to be illustrative only and in no way limiting. The described embodiments are susceptible to many modifications of form, arrangement of parts, details and order of operation. The invention is intended to encompass all such modification within its scope, as defined by the claims.

## Claims

1. A method of forecasting usage of one or more parts, the method comprising:
receiving, by a computing device, historical usage data for said one or more parts;
training, by said computing device, one or more machine learning models based on said historical usage data;
generating, by said computing device, a predicted amount of future demand for said one or more parts based on said one or more machine learning models; and
performing, by said computing device, an action based on said predicted amount of future demand for said one or more parts.

2. The method of claim 1, further comprising generating clean data based on said historical usage data by detecting outliers and missing values in said historical usage data.

3. The method of claim 2, wherein said clean data includes time stamp data and part usage data.

4. The method of claim 2 or 3, wherein generating said predicted amount of future demand comprises applying said clean data to said one or more machine learning models.

5. The method of one of claims 1 to 4, wherein generating said predicted amount of future demand is based on an ensemble model based on said one or more machine learning models.

6. The method of one of claims 1 to 5, wherein said action comprises generating a notification.

7. The method of claim 6, wherein said notification comprises one or more of an email notification, an notification for display on a graphical user interface of a computing device associated with a user, and/or a text message.

8. The method of one of claims 1 to 7, wherein said action comprises effecting an order of said predicted amount of said one or more parts.

9. A system for forecasting usage of one or more parts, the system comprising:
a data accumulator module for receiving historical usage data for said one or more parts;
a model generation module for training one or more machine learning models based on said historical usage data;
a part forecasting module for generating a predicted amount of future demand for said one or more parts based on said one or more machine learning models; and
a notification module for performing an action based on said predicted amount of future demand for said one or more parts.
